# EUROPÄISCHE PATENTSCHRIFT

(11) **EP 1 236 875 B1**
(45) Veröffentlichungstag und Bekanntmachung des Hinweises auf die Patenterteilung: **26.01.2005**
(21) Anmeldenummer: 02012468.1
(22) Anmeldetag: 05.07.1999
(51) Int. Cl.: F02B 43/00, F02B 29/00, F02D 9/16

(54) **Verfahren zum Steuern des Betriebs einer Hubkolbenbrennkraftmaschine sowie Verwendung einer Ladungssteuervorrichtung bei einem solchen Verfahren**
Method for controlling a reciprocating internal combustion engine and use of a charge control device for such a method
Méthode de réglage du fonctionnement d'un moteur à combustion interne et utilisation d'un dispositif de réglage de charge dans cette méthode

(30) Priorität: 08.07.1998 DE 19830575
(43) Veröffentlichungstag der Anmeldung: 04.09.2002
(62) Teilanmeldung aus: 99932817.2
(73) Patentinhaber: Nonox B.V., 6433 KC Hoensbroek (NL)
(72) Erfinder: Uitenbroek, Paul, 52134 Kohlscheid (DE)
(74) Vertreter: Kramer - Barske - Schmidtchen

(56) Entgegenhaltungen:
- EP-A- 0 718 481
- EP-A- 0 786 589
- EP-A- 0 829 627
- DE-A- 2 938 118
- JP-A- 8 177 536
- US-A- 4 738 233
- US-A- 5 105 784

## Beschreibung

Die Erfindung betrifft ein Verfahren zum Steuern des Betriebs einer Hubkolbenbrennkraftmaschine, insbesondere eines Gasmotors, sowie die Verwendung einer Ladungssteuervorrichtung bei einem solchen Verfahren.

Einer der Gründe dafür, daß Hubkolbenbrennkraftmaschinen, insbesondere mit einer Drosselklappe gesteuerte, nach dem Viertaktverfahren arbeitende Hubkolbenbrennkraftmaschinen, mit abnehmbarer Last einen zunehmend höheren spezifischen Verbrauch, d.h. Verbrauch je abgegebener Nutzeinheit haben, liegt in den Drosselverlusten. Strömungsabwärts der Drosselklappe bildet sich in dem Volumen des Saugrohrs zwischen der Drosselklappe und dem Einlaßventil bei zunehmend geschlossener Drosselklappe ein zunehmender Unterdruck, der sich während der Zeitdauer, während der das Einlaßventil geschlossen ist, abbaut. Die in dem mit Unterdruck beaufschlagten Volumen gespeicherte Energie geht somit für die Nutzenenergie verloren. Der während der Abwärtsbewegung des Kolbens beim Ansaughub erzeugte Unterdruck verursacht eine Verlust behaftete Ladungswechselschleife im p-V-Diagramm.

In der US 5,105,784 ist eine Brennkraftmaschine beschrieben, bei der stromoberhalb des Einlaßventils ein Drehschieberventil angeordnet ist, dessen Drehschieber eine sich in axiale Richtung bezüglich des Umfangswinkels erweiternde Durchgangsöffnung aufweist. Durch axiale Verschiebung des Drehschiebers kann die Öffnungsdauer des Drehschieberventils verändert werden. Durch Veränderung der Phasenlage zwischen dem Drehschieber und der ihn antreibenden Kurbelwelle kann der Öffnungsbeginn verändert werden. Insgesamt kann dadurch beispielsweise ein vorbestimmter Schließzeitpunkt bei einer vorgegebenen Öffnungsdauer dadurch eingestellt werden, daß die axiale Position des Drehschiebers zunächst entsprechend der erwünschten Öffnungsdauer eingestellt wird und dann die Phase so eingestellt wird, daß sich der erwünschte Schließzeitpunkt ergibt.

Das vorbekannte Drehschieberventil dient in erster Linie dazu, unerwünschte Strömungen aus dem Zylinder in den Ansaugkanal bei Überlappungen der Öffnungen von Auslaßventil und Einlaßventil zu vermeiden. Ansonsten arbeitet die Ladungssteuervorrichtung konventionell mit Drosselklappe.

Eine Eigenart der vorbekannten Ladungssteuervorrichtung liegt darin, daß die axiale Lage und die Phasenlage im allgemeinen in Kombination verändert werden müssen, was sowohl konstruktiv als auch steuerungstechnisch verhältnismäßig aufivendig ist. Weiter hängt die zeitliche Dauer der Öffnungs- und Schließflanken des Drehschieberventils von der Drehzahl der Kurbelwelle ab, was bei niedrigen Drehzahlen, wenn es dort auf hohe Genauigkeit ankommt, zu langen Öffnungs- und Schließflanken führt, wodurch nicht nur die Genauigkeit nachteilig beeinflußt wird, sondern auch die Ladungswechselverluste steigen. Eine weitere Eigenart des bekannten Walzendrehschieberventils liegt darin, daß sich sein Öffnungsquerschnitt mit der Öffnungsdauer (Kurbelwinkel-bezogen) ändert.

Aus der DE 29 38 118 A1 ist eine Ladungssteuervorrichtung bekannt, bei der stromoberhalb eines Einlaßventils ein Drehschieberventil angeordnet ist, das von der Kurbelwelle angetrieben wird und dessen Phasenlage relativ zur Drehung der Kurbelwelle veränderbar ist. Ein solches Drehschieberventil kann derart gesteuert werden, daß es bei abnehmender Leistungsanforderung zunehmend vor dem Einlaßventil schließt, so daß das Drehschieberventil anstelle einer Drosselklappe zur Ladungssteuerung verwendet wird. Damit lassen sich gegenüber drosselklappengesteuerten Motoren Verbrauchsminderungen erzielen.

Die US 4,738,233 beschreibt ein Ansaugsystem für eine Hubkolbenbrennkraftmaschine, bei dem strömungsoberhalb eines normalen als Steuerventil ausgebildeten Einlassventils bzw. Ladungswechselventils ein weiteres Ventil angeordnet ist, das den Einlasskanal zyklisch öffnet und schließt. Stromoberhalb des weiteren Ventils ist im Einlasskanal ein Tank angeordnet, dessen Funktion darin besteht, eine von dem weiteren Ventil bei dessen Schließen ausgehende negative Druckwelle bei ihrer Reflexion in eine positive Druckwelle umzuwandeln, die im Brennraum zur Erhöhung der Ladung führt. Das weitere Ventil ist als Drehventil ausgebildet, das über eine Phasenschiebereinrichtung 22 von der Kurbelwelle angetrieben wird. Bei unter hoher Drehzahl laufender Brennkraftmaschine fällt die Öffnungszeitdauer des Drehventils 18 im wesentlichen mit der des Einlassventils 11 zusammen (vgl. Spalte 5, Zeilen 5 bis 8). Mit zunehmend. 'langsamer drehender Brennkraftmaschine wird die Öffnungszeit des Drehventils 18 gegenüber dem Einlassventil nach spät auf einen Zeitpunkt bis nach dem Zeitpunkt verschoben, zu dem der Kolben sich in seinem oberen Totpunkt befindet. Im Gegensatz zur Lehre des Anspruchs 1 wird beim Gegenstand der US 4,738,233 der Schließzeitpunkt des weiteren Ventils somit zunehmend hinter den Schließzeitpunkt des Einlassventils verlegt, wobei das Steuerkriterium "abnehmende Drehzahl" und nicht "abnehmende Leistungsanforderung" ist. Wenn das weitere Ventil geöffnet ist, ist das Einlassventil bereits offen. Die Merkmale des Anspruchs 1 sind somit auch durch die US 4,738,233 in keiner Weise nahegelegt.

Die JP 08177536 A beschreibt eine Brennkraftmaschine mit einem als Tellerventil ausgebildeten Einlassventil und einem strömungsoberhalb im Einlasskanal vor dem Einlassventil angeordneten Drehschieberventil, wobei das Einlassventil und das Drehschieberventil von je einem Aktuator, bspw. einem Schrittmotor, betätigt wird. Mittels einer Steuereinrichtung kann die Öffnungs/Schließzeit des Drehventils 3 derart verändert werden, dass es rascher schließt als die normale Öffnungs/Schließzeit des Einlassventils 15. Der Steuereinrichtung werden Eingangssignale eines Lastsensors 8, eines Kurbelwinkelsensors 9, eines Ansaugdrucksensors 2a und eines Abgasdrucksensors 18a zugeführt. Die Ventil-Öffnungs-Schließzeiten werden abhängig von dem Betriebszustand optimal eingestellt.

Der Erfindung liegt, die Aufgabe zugrunde, ein Verfahren und eine Vorrichtung zu dessen Durchführung zu schaffen, mit dem bzw. der ein besonders sparsamer Betrieb einer Hubkolbenbrennkraftmaschine möglich ist. Der Erfindung liegt weiter die Aufgabe zugrunde, eine Verwendung einer Ladungssteuervorrichtung für ein solches Verfahren anzugeben.

Eine Lösung des das Verfahren betreffenden Teils der Aufgabe wird mit einem Verfahren gemäß Anspruch 1 erzielt.

Mit dem erfindungsgemäßen Verfahren, bei dem sich im Ansaugrohr zwischen dem Einlaßventil und dem weiteren Ventil aufbauender Unterdruck im Teillastbereich für eine Verminderung der Ladungswechselverluste genutzt wird und die als "Teilläst-Resonanzaufladung" bezeichnet werden kann, wird der Verbrauch der Brennkraftmaschine im Teillastbereich weiter vermindert.

Die Ansprüche 2 bis 4 sind auf vorteilhafte Durchführungsformen des erfindungsgemäßen Verfahrens gerichtet.

Der Anspruch 5 kennzeichnet eine erste Verwendung zur Lösung des diesbezüglichen Teils der Erfindungsaufgabe.

Das erfindungsgemäß mittels eines elektrischen Schrittmotors angetriebene Drehschieberventil ermöglicht, den Öffnungs- und Schließvorgang des weiteren Ventils direkt und unabhängig voneinander zu steuern. Solche Schrittmotoren sind in an sich bekannter Weise einfach aufgebaut, aber dennoch präzise ansteuerbar, wobei sie - bei entsprechend geringem Trägheitsmoment des angesteuerten Bauteils - sehr rasche Bewegungsabläufe ermöglichen und das betätigte Bauteil in jeder Lage festgehalten werden kann.

Die Verwendung der Ladungssteuervorrichtung gemäß Anspruch 5 wird mit den Merkmalen der Ansprüche 6 bis 8 in vorteilhafter Weise weitergebildet.

Der Anspruch 9 kennzeichnet eine weitere Verwendung einer Ladungssteuerung zur Lösung des diesbezüglichen Teils der Erfindungsaufgabe. Das elektromagnetisch betriebene Ventil dieser Ausführungsform arbeitet druckabhängig und kann dadurch hinsichtlich seiner Öffnungs- und Schließfunktionen frei variabel und präzise angesteuert werden.

Der Unteranspruch 10 kennzeichnet eine vorteilhaft verwendete Ausführungsform des Ventils.

Der Anspruch 11 ist auf eine weitere vorteilhaft verwendete Ausführungsform der Ladungssteuervorrichtung gerichtet, mit der Zylinder mit zwei Einlaßventilen vorteilhaft betrieben werden können.

Die Erfindung läßt sich für alle Arten von ventilgesteuerten Hubkolbenbrennkrafmaschinen einsetzen, für Zweitakt-Motore, Viertakt-Motore, Otto-Motore, Diesel-Motore usw.

Die Erfindung wird im folgenden anhand schematischer Zeichnungen beispielsweise und mit weiteren Einzelheiten erläutert.

Es stellen dar:
- Fig. 1: eine Prinzipansicht eines Zylinders einer Hubkolbenbrennkraftmaschine mit einem vorgeschalteten Drehschieberventil,
- Fig. 2: den Betrieb der Maschine gemäß Fig. 1 in unterschiedlichen Betriebsphasen,
- Fig. 3: eine perspektivische Ansicht eines Drehschieberventils in auseinandergezogener Darstellung,
- Fig. 4: eine Schnittansicht eines Drehschieberventils bei einem Zylinder mit zwei Einlaßventilen,
- Fig. 5: eine Prinzipanordnung des Drehschieberventils zur Erläuterung eines Aufladeverfahrens,
- Fig. 6: Arbeitsdiagramme unterschiedlicher Prozeßführungen,
- Fig. 7: eine Schnittansicht einer Ausführungsform eines Drehschieberventils mit integriertem Elektromotor
- Fig. 8: eine Registeraufladungseinrichtung und
- Fig. 9: eine Ausführungsform eines Ventils.

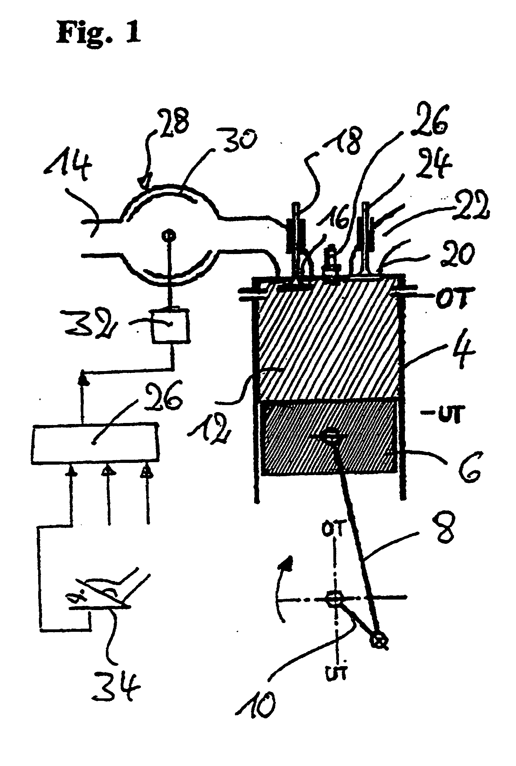

Gemäß Fig. 1 weist eine Brennkraftmaschine, beispielsweise ein mit Gas betriebener, verhältnismäßig langsam laufender Nutzfahrzeugmotor, einen Zylinder 4 auf, in dem ein Kolben 6 arbeitet, der über ein Pleuel 8 eine Kurbelwelle 10 drehantreibt. Mit UT und OT sind die jeweiligen Stellungen bezeichnet, in denen der Kolben 8 seine niedrigste und seine höchste Stellung einnimmt.

Die Zufuhr von Frischladung in den Brennraum 12 des Zylinders erfolgt durch ein Saugrohr 14 hindurch, wobei in der Einlaßöffnung 16, in der das Saugrohr 14 in den Zylinder 4 mündet, ein Einlaßventil 18 arbeitet. In der Auslaßöffnung 20, von der ein Auslaßkanal 22 ausgeht, arbeitet ein Auslaßventil 24.

Zur Zündung der Ladung im Brennraum 12 ist eine Zündkerze 26 vorgesehen. Das Einlaßventil 18 und das Auslaßventil 24 werden in an sich bekannter Weise über eine oder mehreren Nockenwellen gesteuert, die von der Kurbelwelle 10 phasenstarr oder mit veränderlicher Phase drehantreibbar ist bzw. sind.

Eine an sich bekannte Einrichtung, in der der Brennstoff (Gas) der Frischluft zugeführt wird, so daß im Saugrohr 14 brennbare Frischladung einer vorbestimmten Zusammensetzung (Luftverhältnis) vorhanden ist, ist nicht dargestellt.

Zur Steuerung der beschriebenen Brennkraftmaschine dient, wie an sich bekannt, ein mit einem Mikroprozessor und zugehörigen Speichern versehenes Steuergerät 26.

Der bisher beschriebene Motor ist in seinem Aufbau an sich bekannt und wird daher nicht weiter erläutert.

Möglichst kurz stromoberhalb der Einlaßöffnung 16 ist im Saugrohr ein Drehschieberventil 28 angeordnet, dessen als Walze ausgebildeter Drehschieber 30 zwei sich gegenüberliegende Öffnungen aufweist, die die beiden durch das Drehschieberventil 28 voneinander getrennten Zweige des Saugrohrs 14 wahlweise miteinander verbinden oder voneinander trennen. Zum Antrieb des Drehschiebers 30 ist ein Elektromotor 32, beispielsweise ein Schrittmotor vorgesehen, der vom Steuergerät 26 angesteuert wird. Das Steuergerät 26 weist mehrere Eingänge auf, unter anderem einen Eingang, der mit einem Fahrpedal 34 verbunden ist. Weitere Eingänge können mit einem Drehzahlsensor zum Erfassen der Drehzahl bzw. Drehstellung der Kurbelwelle 10, einem Temperatursensor usw. verbunden sein.

Vorteilhafterweise ist die Brennkraftmaschine mit einer Aufladung an sich bekannter Art versehen, z.B. einer Abgasturboaufladung oder einer mechanisch angetriebenen Aufladung, so daß im Saugrohr 14 stromoberhalb des Drehschieberventils 28 ein Überdruck vorhanden ist.

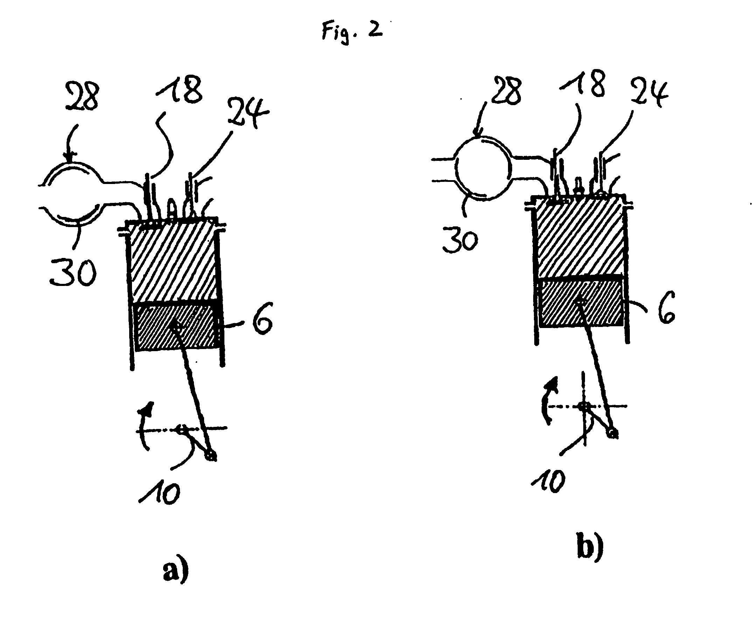

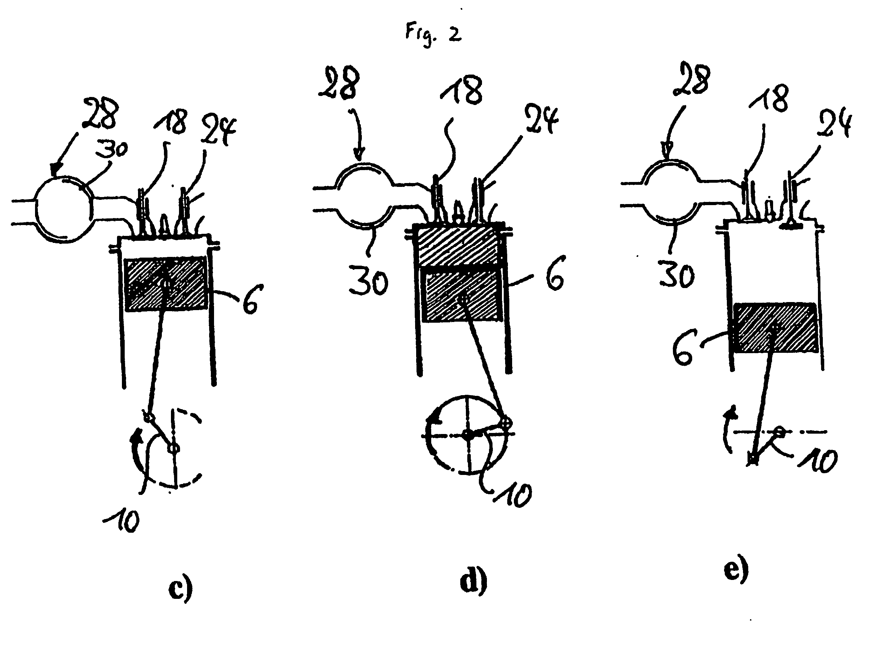

Fig. 2 zeigt verschiedene Betriebsphasen der beschriebenen Brennkraftmaschine. Die Steuerung des Einlaßventils 18 und des Auslaßventils 24 ist dabei beispielhaft so, daß das Einlaßventil 27, 5° vor OT öffnet und 38,5° nach UT schließt und daß das Auslaßventil 57° vor UT öffnet und 25° nach OT schließt.

Fig. 2a zeigt den Zustand des Ansaugens, bei dem sich der Kolben 6 bei offenem Einlaßventil 18 und offenem Drehschieberventil 28 bis etwa 45° vor UT abwärts bewegt hat. Bei weiterer Abwärtsbewegung des Kolbens gemäß Fig. 2 schließt das Drehschieberventil 28 so daß in dem Raum stromab des Drehschieberventils ein Unterdruck entsteht, der beim Bewegen des Kolbens über den unteren Totpunkt hinaus in verlustfreier Weise abgebaut wird, bis das Einlaßventil 18 bei 38,5° nach UT schließt.

Gemäß Fig. 2c bleibt das Einlaßventil 18 dann beim nachfolgenden Verdichtungshub des Kolbens geschlossen, wobei Fig. 2c etwa die Stellung zeigt, in der gezündet wird. Während des Arbeitshubs gemäß Fig. 2d sind das Einlaßventil 18 und das Auslaßventil 28 geschlossen und das Drehschieberventil 28 kann ab dann geöffnet werden. Fig. 2e zeigt den Zustand nach einem Arbeitshub bei offenem Auslaßventil 24 zu Beginn eines Auslaßtaktes mit geschlossenem Einlaßventil 18 und bereits geöffneten Drehschieberventil 28. Wenn der Kolben die Stellung 27,5° vor OT erreicht, öffnet das Einlaßventil 18 und das Auslaßventil 24 schließt bei 25° nach OT, so daß kurz danach die Stellung der Fig. 2a erneut erreicht ist.

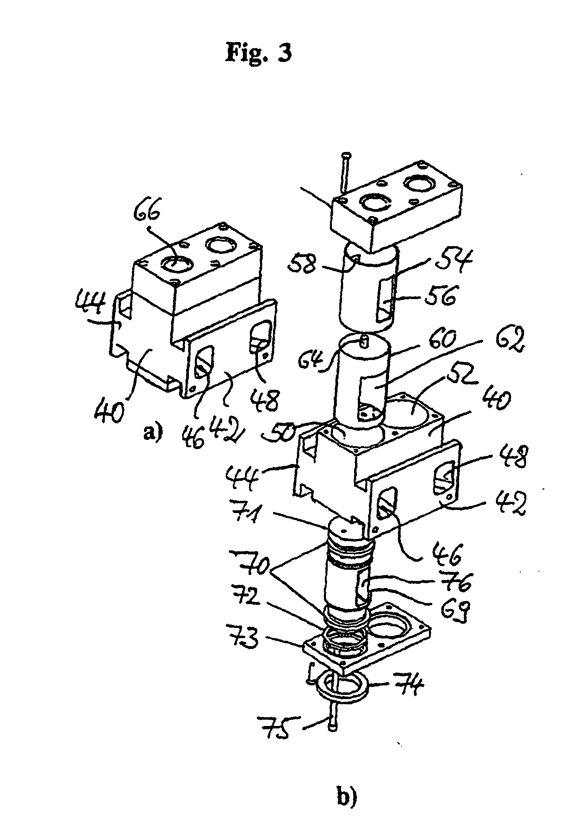

Fig. 3 zeigt in perspektivischer Darstellung gemäß a) im zusammengebauten Zustand und gemäß b) in auseinander gezogener Darstellung eine Baugruppe, mit der das bzw. die Drehschieberventile 28 (Fig. 1) an einen nicht dargestellten Zylinderkopf anflanschbar sind.

Ein Gehäuse 40 weist zwei Anschlußflansche 42 und 44 auf, von denen einer an einen nicht dargestellten Zylinderkopf der Brennkraftmaschine anflanschbar ist und an den anderen das Saugrohr (nicht dargestellt) anflanschbar ist. Das Gehäuse 40 weist zwei Durchgangskanäle 46 und 48 auf, die im Zylinderkopf ausgebildeten Anschlußöffnungen entsprechen, in denen zwei voneinander unabhängige Ansaugkanäle enden, die zu zwei Einlaßventilen eines Zylinders führen.

Quer zu den Durchgangskanälen 46 und 48 sind in dem Gehäuse 40 Durchgangsbohrungen 50 und 52 ausgebildet. In jeder der Durchgangsbohrungen 50 und 52 arbeitet ein im folgenden beschriebenes Drehschieberventil, wobei nur das der Durchgangsbohrung 50 zugeordnete Drehschieberventil beschrieben wird.

In die Bohrung 50 ist eine Buchse 54 unter Passung eingesetzt, die zwei sich gegenüberliegende Öffnungen 56 und 58 aufweist. Die Buchse 54 ist im Gehäuse 40 drehfest aufgenommen. Die Öffnungen 56 und 58 fluchten mit dem Durchgangskanal 46 und entsprechen dessen Querschnittsfläche.

In die Buchse 54 ist ein Walzendrehschieber 60 eingesetzt, der mit sich gegenüberliegenden Öffnungen ausgebildet ist, von denen nur die Öffnung 62 sichtbar ist.

Der Walzendrehschieber 60 ist innerhalb der Buchse 54 drehbar und weist an seiner geschlossenen Oberseite einen Zapfen 64 auf, der von einer Verbindungskupplung 66 mitgenommen wird, die in ein mit dem Gehäuse 40 verschraubtes Oberteil 68 eingesetzt ist.

Der Walzendrehschieber wird mittels Wälzlager 70 auf dem Führungsdorn 69 geführt und gelagert. Der Führungsdorn 69 hat weiterhin die Aufgabe die Gemischströmung zu führen bzw. eine Auffächerung oder Strömungsabriß im Ventil zu verhindern. Dazu ist der Führungsdom 69 in der Grundplatte 73 fest und verdrehsicher mittels der Nutmutter 74 so positioniert, daß bei Montage (Verschraubung) der Grundplatte 73 an das Ventilgehäuse 40, die Kanaldurchführungen 76 im Führungsdorn 69 und die Kanaldurchführungen 46, 48 im Ventilgehäuse 40 exakt fluchten. Die Bauteile 71, 72 und 75 (Anlaufscheiben und Schrauben) dienen der Positionierung der Wälzlager 70 auf dem Führungsdorn 69. Zur Vermeidung eines Totvolumens im Raum zwischen Führungsdornoberfläche und der inneren Oberfläche des Walzendrehschiebers 60 ist der Außendurchmesser des feststehenden Führungsdomes 60 nur geringfügig kleiner als der Innendurchmesser des rotierenden Walzendrehschiebers 60. Das Spaltmaß zwischen diesen beiden Bauteilen (60 und 69) ist dabei so gewählt, daß sich eine gute Dichtwirkung, bei berührungsfreiem Lauf der Bauteile ergibt.

Die Bauteile 54, 69,60 und 62 bilden das Drehschieberventil 28 der Fig. 1.

Wie aus Fig. 3 ersichtlich, können die beiden Durchgangskanäle 46 und 48 durch die in den Durchgangsbohrungen 50 und 52 arbeitenden Drehschieberventile mit jeweils einem eigenen Schrittmotor getrennt und unabhängig voneinander gesteuert werden, so daß beispielsweise bei geringer Lastanforderung (kleine Betätigung des Fahrpedals 34) ein Einlaßkanal des Zylinders ganz verschlossen bleibt, wodurch die dem Zylinder zugeführte Ladung je nach Ausbildung des Einlaßkanals in einer Drallströmung (Wirbelachse parallel zur Bewegungsrichtung des Kolbens) oder einer Tumbleströmung (Wirbelachse senkrecht zur Bewegungsrichtung des Kolbens) einströmt. Mit zunehmender Last werden die beiden Drehschieberventile derart angesteuert, daß sich die durch die beiden Einlaßkanäle einströmenden Ladungen zunehmend angleichen, wodurch die Wirbelbildung im Zylinder bzw. Brennraum hinsichtlich einer optimalen Brenngeschwindigkeit/Brennfunktion dem Betriebszustand des Motors angepaßt werden kann. Auf diese Weise lassen sich bei Teillast gute thermodynamische Bedingungen für eine effektive Verbrennung erzielen, ohne daß bei Vollast die Füllung des Zylinders leidet

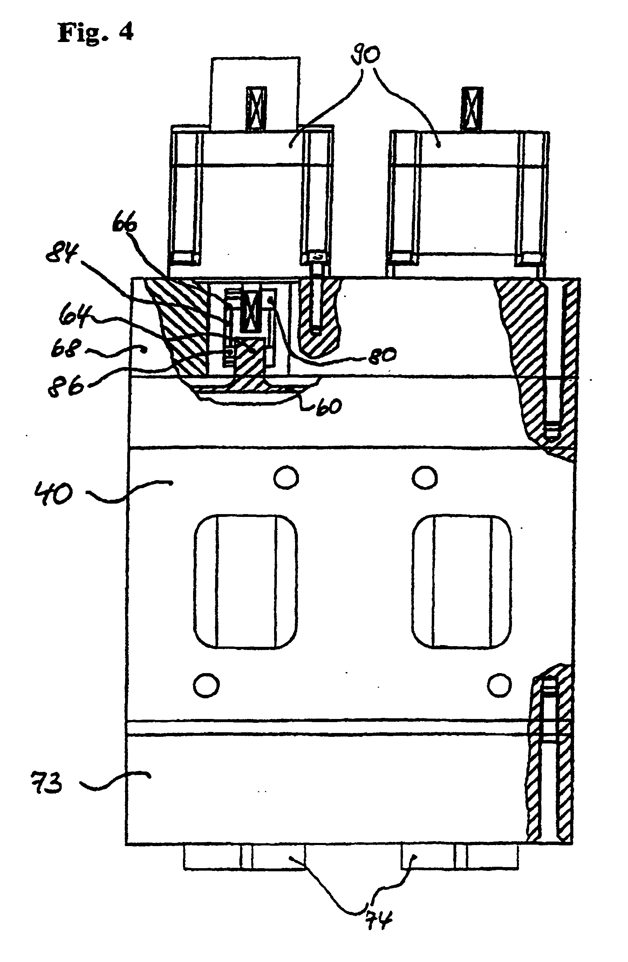

Fig. 4 zeigt eine Seitenansicht auf das Gehäuse 40, teilweise aufgeschnitten. Deutlich sichtbar sind das Gehäuse 40, das Gehäuseoberteil 68, der Zapfen 64 des Walzendrehschiebers 60 sowie auf die Verbindungskupplungen 66 aufgesetzte Schrittmotoren 90. Jede Verbindungskupplung 66 enthält eine Mitnehmerscheibe 80 in die die Motorwelle 82 drehfest eingreift. Die Mitnehmerscheibe 80 ist über ein drehmomentübertragendes, biegeweiches Bauteil 84 mit einer weiteren Mitnehmerscheibe 86 verbunden, die drehfest bzw. formschlüssig in den Zapfen 64 des Walzenschiebers 60 eingreift. Auf diese Weise ist eine biegeweiche und torsionssteife Verbindungskupplung geschaffen.

Wenn bei der beschriebenen Ausführungsform die beiden Schrittmotoren von dem Steuergerät 26 unterschiedlich angesteuert werden, beispielsweise derart, daß der dem Durchgangskanal 48 (Fig. 3) zugeordnete Walzendrehschieber den Durchgangskanal 48 früher schließt als der Durchgangskanal 46 geschlossen wird, so strömt durch den Durchgangskanal 46 mehr Frischladung in den Zylinder ein, was bei entsprechender Gestaltung der Einlaßkanäle und Einlaßventile zu einer Wirbelbildung im Brennraum führt. Die unterschiedliche Ansteuerung der Schrittmotoren kann sich auf die Betriebsbereiche des Motors beschränken, in denen damit besondere Vorteile erzielt werden, beispielsweise den Schwachlastbetrieb. Dieses Ansteuerungskonzept beinhaltet natürlich ebenfalls die Möglichkeit einen Ansaugkanal mittels des Walzendrehschiebers komplett zu verschließen, wodurch eine komplette Kanalabschaltung realisiert wird.

Durch die Ansteuerung des oder der Drehschieberventile mit Hilfe der Elektromotoren bzw. Schrittmotoren 32 (Fig. 1) bzw. 90 (Fig. 4) ist eine weitgehende Freiheit der Öffnungs- und der Schließzeitpunkte der Drehschieberventile relativ zu den hinter diesen angeordneten Einlaßventilen möglich. Durch zweckentsprechende Auswahl der Saugrohrlängen und darauf abgestimmte Öffnungs- und Schließzeitpunkte der Drehschieberventile ist es beispielsweise möglich, den Unterdruck, der sich in der Arbeitsphase der Fig. 2b zwischen dem Drehschieberventil 28 und dem Einlaßventil 18 bildet, gezielt derart zu nutzen, daß eine sich beim Öffnen des Drehschieberventils und noch geschlossenem Einlaßventil ausbildende Druckwelle zu einem Zeitpunkt das Einlaßventil erreicht, zu dem dieses gerade öffnet, so daß die vom Kolben zu leistende Ansaugarbeit vermindert ist. Weiterhin kann durch die weitgehende Freiheit der Öffnungs- und Schließzeitpunkte der Drehschieberventile relativ zu den hinter diesen angeordneten Einlaßventilen gezielt Einfluß darauf genommen werden, wann eine, durch den angesprochenen Unterdruck erzeugte, und am offenen Ansaugrohrende reflektierte Welle als Druckwelle gegen Ende des Saughubes am offenen Einlaßventil ankommt, so daß ein Nachladeeffekt erreicht wird, der die Zylinderfüllung erhöht und die aufzubringende Ansaugarbeit vermindert.

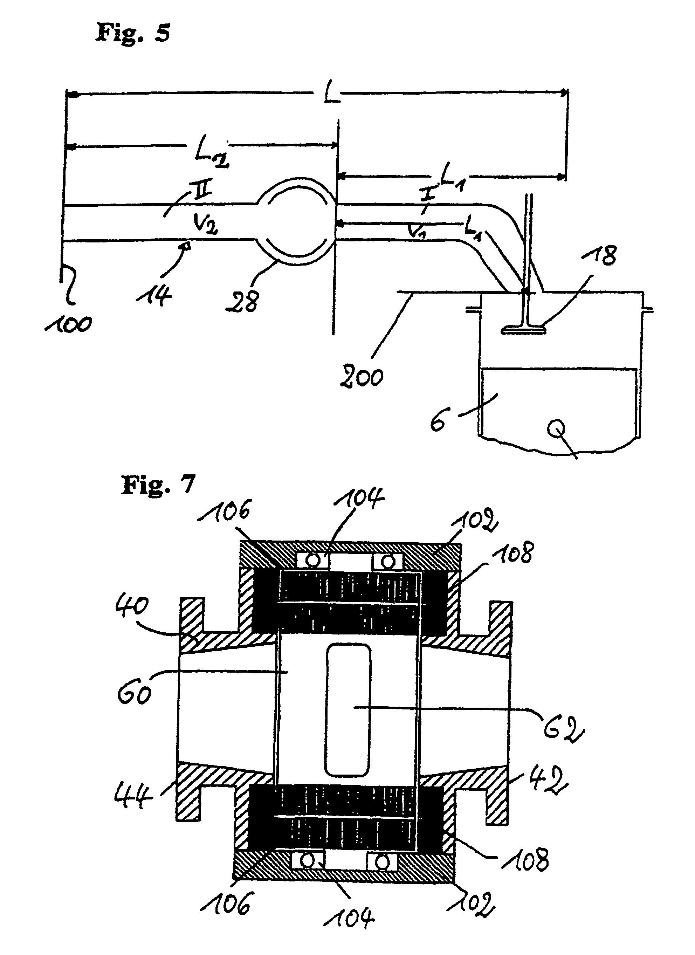

In Figur. 5 ist der vorstehend erwähnte Zusammenhang skizziert. Das Drehschieberventil 28 unterteilt das Ansaugrohr 14 mit der Gesamtlänge L und dem Gesamtvolumen V in zwei Teilbereiche I und II mit L₁, V₂ und L₁, V₂. Der im Teilvolumen V1 bei geschlossenem Drehschieberventil und geschlossenem Einlaßventil gespeicherte Unterdruck, erzeugt, wenn das Drehschieberventil geöffnet wird eine Welle, die am offenen Ansaugrohrende 100 reflektiert wird, und nach Durchlaufen der gesamten Rohrlänge L als Druckwelle am offenen Einlaßventil 18 ankommt. Position 200 kennzeichnet den Einlaßventilsitz, so daß die wirksame Rohrlänge L durch die Positionen 100 und 200 bestimmt ist. Dieser Effekt läßt sich in weiten Betriebsbereichen des Motors nutzen, da das erforderliche Timing zum Auslösen der Wellenfortpflanzung und der Reflexion am offenen Rohrende durch die variablen Öffnungs- und Schließzeitpunkte des Drehschieberventils 4 gewährleistet werden kann.

Es versteht sich, daß die Variablität der Öffnungs- und Schließzeitpunkte des bzw. der Drehschieberventile derart ist, daß sowohl der Öffnungszeitpunkt als auch der Schließzeitpunkt das gesamte Öffnungsintervall des Einlaßventils überdecken kann.

Aufgrund der Steuerungsfreiheit sind die Öffnungs- und insbesondere die Schließphasen der schrittmotorgesteuerten Drehschieberventile wesentlich kürzer als bei zwangsgesteuerten (über die Kurbelwelle mit festen Übersetzung angetriebenen) Drehschieberventilen.

Hierdurch verkürzt sich während des Ansaugtaktes die Phase, bzw. der Kolbenweg, während der Drehschieberventil-Querschnitt bedingte Drosselverluste entstehen.

Mit Vorteil ist das erfindungsgemäße System für aufgeladene Motoren einsetzbar.
Der Vorteil des erfindungsgemäßen Systems für aufgeladene Motoren wird dadurch geprägt, daß die Funktion der Aufladungsbegrenzung, welche normalerweise von einem Wastegateventil (Umleiten des Abgasstromes am Turbinenrad vorbei) ausgeübt wird, durch gezielte Steuerung des bzw. der Drehschieberventile übernommen wird. Hierbei wird bei Erreichen oder/und Überschreiten des maximalen Aufladedruckes, der Schließzeitpunkt der Drehschieberventile nach früh verstellt. Dadurch wird die Zylinderladung und dadurch bedingt die an den Turbolader zugeführte Energiemenge verringert. Durch dieses Verfahren wird immer, durch maximale Entspannung des Abgasmassenstromes, die maximale erreichbare Verdichterarbeit im Verdichter des Turboladers geleistet. Es geht keine Energie über das Wastegateventil verloren. Durch gezielte Frühverstellung der Drehschieberventile wird die gewünschte Zylinderladungsmenge betriebspunktspezifisch bei einer optimalen Druckdifferenz zwischen Ladedruck und Abgasgegendruck dem Zylinder zugeführt. Obengenannte optimale Druckdifferenz verursacht ggf einen positiven arbeitsliefernden Ladungswechselanteil im PV-Diagramm. Dieses Verfahren ist bekannt unter dem Begriff Miller Zyklus. Das erfindungsgemäße System stellt eine spezifische Realisierung des Miller Cycle dar.

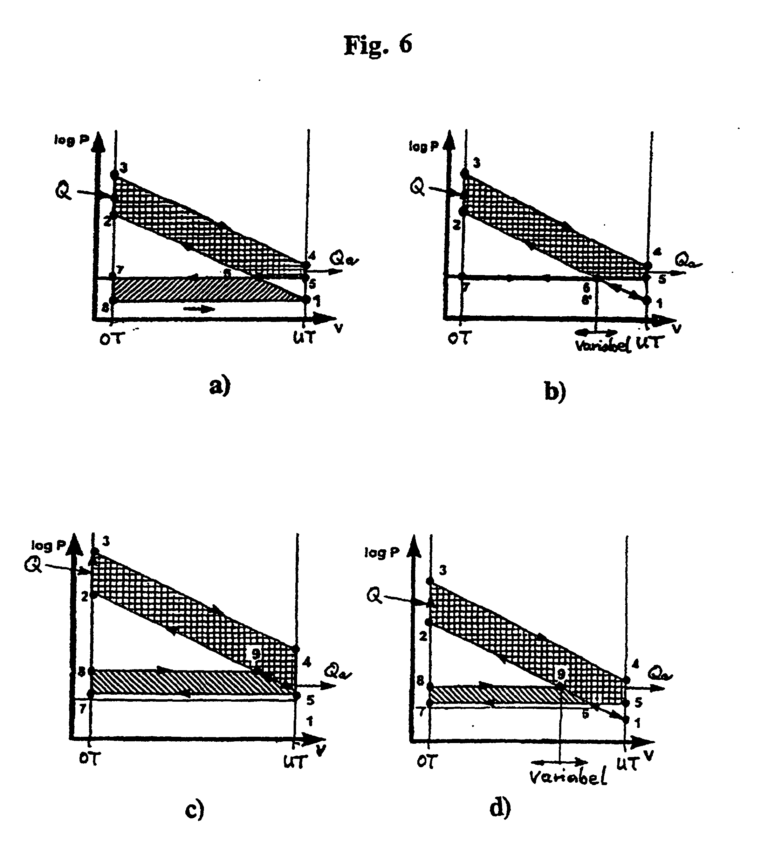

Fig. 6 zeigt Arbeitsdiagramme, wobei die Senkrechte den Logarithmus des Druckes P im Arbeitsraum des Zylinders angibt und die Waagrechte das Volumen V des Arbeitsraums. OT und UT gibt jeweils den oberen Totpunkt und den unteren Totpunkt des Kolbens an.

Fig. 6a zeigt das Arbeitsdiagramm eines Drosselklappen gesteuerten Viertaktmotors. Die einzelnen Kurvenzüge bedeuten:
- 1-2:: polytrope Kompression
- 2;3:: isochore Wärmezufuhr mit Freisetzung der Verbrennungswäre Q,
- 3;4:: polytrope Expansion (Arbeitsleistung),
- 4;5:: isochore Wärmeabfuhr (Auslaß öffnet),
- 5-6-7:: isobare Verdichtung (Auslaßhub),
- 7;8:: Einlaßöffnung
- 8-1:: isobares Ansaugen.

Die gestrichelte Fläche gibt die Pumpverlustarbeit an; die straffierte Fläche gibt die Arbeitsleistung an.

Fig. 6b zeigt das Arbeitsdiagramm bei Leistungsteuerung durch variables Schließen des Einlaßventils. Der Unterschied zur Fig. 6a liegt darin, daß der Ausschubhub 5-7 und der Ansaughub 7-6' bei gleichem Druckniveau erfolgen, und daß die polytrope Expansion 6'-1 und die polytrope Kompression 1-6' bei gleichem Druck erfolgen, so daß die Pumpverlustfläche zu Null wird. Der Punkt 6 bzw. 6' (Schließen des Einlaßventils) ist variabel.

Fig. 6c zeigt den klassischen Miller-Zyklus, bei dem wie bei den Fig. 6a und 6b im UT nach der polytropen Expansion von 3 nach 4 eine Wärmemenge Qₐ abgegeben wird. Der Auslaßhub von 5 nach 7 findet bei einem verhältnismäßig geringen Abgasgegendruck statt. Der Ansaughub von 8 nach 9 findet bei einem höheren, vom Aufladesystem erzeugten Druck statt, so daß in der schräg straffierten Fläche im Gegensatz zum Verfahren nach Fig. 6a Arbeit gewonnen wird. 9 bezeichnet den Punkt, an dem das Einlaßventil geschlossen wird.

Fig. 6d gibt das Arbeitsdiagramm für einen Miller-Zyklus an, bei dem das Schließen des Einlaßventils (Punkt 9) variabel ist, wodurch der gesamte Arbeitszyklus weiter optimiert werden kann.

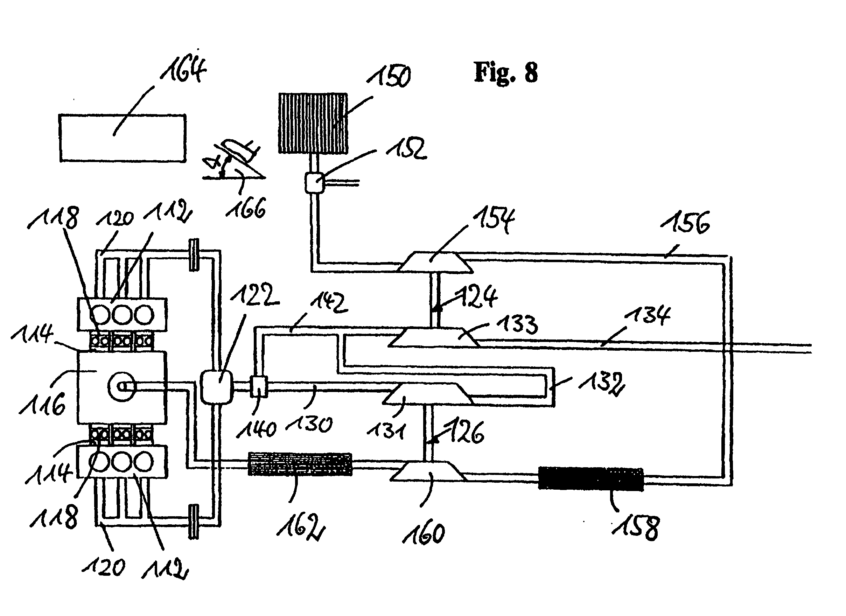

Fig. 7 zeigt eine Schnittansicht eines gegenüber Fig. 3 abgeänderten Drehschieberventils. Funktionsähnliche Bauteile sind mit gleichen Bezugszeichen wie in Fig. 3 belegt. Der Walzendrehschieber 60 mit der Öffnung 62 ist drehbar in dem Gehäuse 40 aufgenommen, das die Anschlußflansche 42 und 44 aufweist. Das Gehäuse 42 ist beidseitig mit Deckeln 102 verschlossen. Innerhalb der Deckel 102 sind Lagerringe 104 angeordnet, mittels derer der Rotor bzw. Walzendrehschieber 60 in dem Gehäuse 40 drehbar gelagert ist.

Im Unterschied zur Ausführungsform gemäß Fig. 3 und 4 ist der als Schrittmotor ausgebildete Elektromotor in das Drehschieberventil integriert, in dem Rotorspulen 106 mit sich abwechselnden Nord- und Südpolen starr mit dem Rotor bzw. Walzendrehschieber 60 verbunden sind. Statorspulen 108 des Elektromotors sind fest mit dem Gehäuse 40 verbunden und in entsprechenden Ausnehmungen des Gehäuses 40 angeordnet.

Mit der beschriebenen Anordnung ist ein außerordentlich kompaktes Drehschieberventil mit integriertem Schrittschaltmotor geschaffen. Die elektrischen Anschlüsse zur Ansteuerung der Statorspulen 108 mittels eines Steuergerätes sind nicht dargestellt.

Fig. 8 zeigt einen mit Drehschieberventilen zur Laststeuerun ausgerüsteten 6-Zylinder-Motor mit einer zusätzlichen Registeraufladeeinrichtung.

Der Motor weist zwei Zylinderbänke 112 mit je drei Zylindern auf, die über Saugrohre 114 mit einem Gemisch- bzw. Luftverteile 116 verbunden sind.

In jedem der Saugrohre arbeiten entsprechend den zwei je Zylinder vorgesehenen Einlaßventilen 2 elektrisch betätigbare Drehschieberventile 118.

Die Abgasleitungen 120 aller Zylinder sind in einem Sammler 122 zusammengeführt und werden zum Antrieb von zwei Turboladern 124 und 126 genutzt.

Vom Abgassammler 122 führt eine Leitung 130 zur Abgasturbine 131 des Turboladers 126 und von dort eine weitere Leitung 132 zur Abgasturbine 133 des Turboladers 124, von wo aus eine Abgasleitung 134 zu einem nicht dargestellten Schalldämpfer führt. In der Leitung 130 ist ein elektrisch betätigbares Verteilerventil 140 angeordnet, mit dem ein Teil des vom Sammler 122 kommenden Abgasstroms in eine Zweigleitung 142, die in die Abgasturbine des Turboladers 124 mündet.

Die Ladungsversorgung der Brennkraftmaschine geschieht dadurch, daß Frischluft durch einen Luftfilter 150 angesaugt wird, der Frischluft in einer Mischeinheit 152 Gas in einem vorbestimmten Verhältnis, das von Betriebsbedingungen der Brennkraftmaschine abhängen kann, zugemischt wird, die Ladung anschließend in der Laderturbine 154 des Turboladers 124 verdichtet wird, die verdichtete Ladung über eine Leitung 156 durch einen Ladeluftkühler 158 hindurch der Laderturbine 160 des Abgasturboladers 126 zugeführt wird und von dort durch einen weiteren Ladeluftkühler 162 hindurch dem Luftverteiler 116 zugeführt wird.

Zur Steuerung der Drehschieberventile 118, des Verteilerventils 140 sowie ggf. von Schaufelstellungen in den Einlässen der Abgasturbinen 131 und 133 der Turbolader 124 und 126 falls diese mit variabler Turbinengeometrie ausgestattet sind, dient ein elektronisches Steuergerät 164, dessen Eingänge mit Sensoren zur Erfassung von Betriebsparametern der Brennkraftmaschine und der Stellung eines Gaspedals 166 verbunden sind und dessen Auslässe mit den genannten elektrisch ansteuerbaren Bauteilen verbunden sind. Die elektrischen Leitungen sowie die Sensoren sind der Einfachheit halber nicht eingezeichnet.

In dem Steuergerät 164 sind die Parameter zur Einstellung der Drehschieberventile 118, des Verteilerventils 140 sowie ggf. der Einlaßgeometrien der Turbolader 124 und 126 in Abhängigkeit von den Betriebsparametern der Brennkraftmaschine derart gespeichert, daß die Öffnungs- und Schließzeitpunkte der Drehschieberventile 118 sowie die jeder Abgasturbine zugeführte Abgasmenge und ggf. die Turbinengeometrie optimal derart aufeinander abgestimmt sind, daß die geforderte Leistung mit best möglichem Wirkungsgrad der Brennkraftmaschine erzeugt wird.

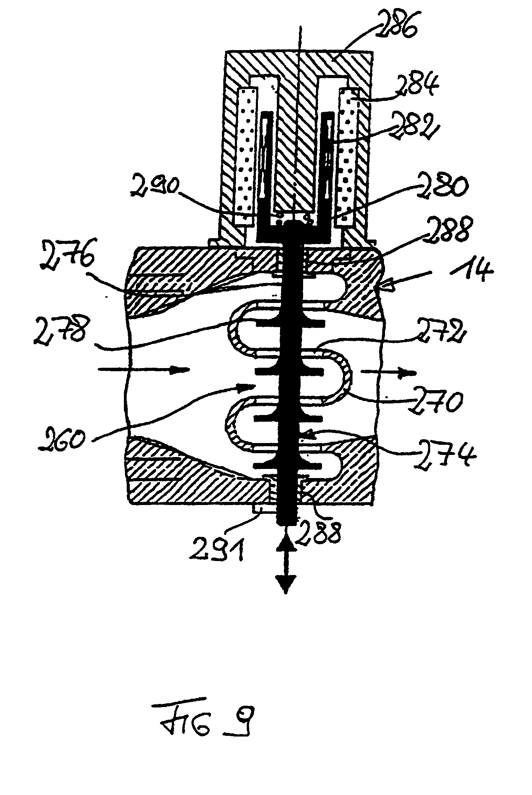

Fig. 9 zeigt eine abgeänderte Ausführungsform eines im Saugrohr 14 (Fig. 1) angeordneten Ventils.

Gemäß Fig. 9 weist das Saugrohr 14 eine im Längsschnitt durch das Saugrohr mäanderförmige Trennwand 270 auf, in der quer zur axialen Richtung des Saugrohrs im dargestellten Beispiel vier Ventilöffnungen 272 ausgebildet sind. Quer durch das Saugrohr und die Ventilöffnungen hindurch erstreckt sich ein insgesamt mit 274 bezeichnetes Ventilglied, das einen Schaft 276 und daran starr angebrachte, den Schaft umschließende Scheiben 278 aufweist. Die Anordnung ist derart, daß sich in der in Fig. 9 dargestellten, geöffneten Stellung des Ventils oberste und drittoberste Scheiben 278 bezogen auf die Einlaßströmung durch das Saugrohr stromab der zugehörigen Ventilöffnungen 272 befinden und die beiden anderen Scheiben 278 sich stromoberhalb der zugehörigen Ventilöffnungen 272 befinden. Der Durchmesser der Scheiben 278 entspricht etwa dem Durchmesser der Ventilöffnungen 272, so daß das Ventil geschlossen ist, wenn sich der Schaft 276 zusammen mit den Scheiben 278 gemäß Fig. 9 soweit aufwärts bewegt hat, daß sich die Scheiben 278 innerhalb der Öffnungen 272 befinden. Die Scheiben 278 sind vorteilhafterweise strömungsgünstig geformt.

Zur Betätigung des Ventils weist der Schaft 276 außerhalb des Saugrohrs 14 einen zylindrischen Ansatz 280 auf, in dem eine Spule 282 aufgenommen ist, die von einem vorzugsweise als Elektromagnet ausgebildeten Magneten 284 umschlossen wird, der in einem am Saugrohr befestigten Gehäuse 286 aufgenommen ist.

Der Schaft 276 ist im Saugrohr 14 in Buchsen 288 längsverschiebbar geführt. Der zylindrische Ansatz 280 ist derart ausgebildet, daß die Hubbewegung des Schaftes 276 bzw. des Ventilglieds 274 durch seinen Anschlag einerseits an der Außenseite des Saugrohrs 14 und andererseits an einem in ihn einragenden Ansatz des Gehäuses 286 begrenzt ist.

Eine Feder 290 drängt das Ventilglied 274 in seine offene Stellung.

Die Funktion des beschriebenen Ventils ist wie folgt:

Die Spule 282 ist an das Steuergerät 26 (Fig. 1) angeschlossen. Das Ventil ist unter Wirkung der Feder 290 normalerweise offen. Durch Beaufschlagung der Spule 282 mit entsprechendem Strom wird das Ventilglied gemäß Fig. 9 nach oben in eine Stellung bewegt, in der sich die Scheiben 278 innerhalb der Ventilöffnungen 272 befinden und einen Durchfluß von Fluid durch die Ventilöffnungen sperren. Wie ersichtlich, wirkt in der Schließstellung des Ventils, wenn beispielsweise links vom Ventil ein Überdruck herrscht, dieser Überdruck auf die oberste und die drittoberste Scheibe derart, daß das Ventilglied nach unten gedrückt wird, wohingegen der Überdruck auf die unterste und drittunterste Scheibe derart wirkt, daß er das Ventilglied nach oben drückt, so daß das Ventilglied insgesamt unabhängig von der Druckdifferenz kräftefrei ist.

Ein Vorteil, der mit dem geschilderten Ventil erzielt wird, liegt darin, daß es außerordentlich rasch aus der Schließstellung in die Öffnungsstellung und umgekehrt bewegbar ist, so daß eine präzise Steuerung mit geringstmöglichen Strömungsverlusten möglich ist.

Bei einer bevorzugten, dargestellten Ausführungsform ist der Schaft 276 mit einem Stellwegsensor 291 verbunden. Dieser Stellwegsensor 291 liefert Information über die exakte momentane Position des Schafts 276 bzw. der Scheiben 278. Das Steuergerät 26 regelt den Strom durch die Spule 282 derart, daß die Ist-Position der Ventilkörper (276, 278) in jeden Zeitpunkt des Bewegungsablaufintervalls der im Steuergerät einprogrammierten Soll-Position entspricht. Hierdurch wird gewährleistet, daß bei Mehrzylindermotoren die Füllungsmenge pro Zylinder gleich ist bei gleichen Steuerzeiten.

Es versteht sich, daß die elektromagnetische Betätigung in unterschiedlichster Weise variiert werden kann, indem beispielsweise der zylindrische Ansatz 280 als Magnetanker ohne eigene Spule ausgebildet ist. Die dargestellte Ausführungsform (voice coil) hat den Vorteil sehr geringer magetischer Trägheit. Das Ventilglied kann zusammen mit der Trennwand derart abgeändert werden, daß es die Ventilöffnungen bei einer Drehung um 90 ° verschließt bzw. öffnet.

Das Ventil der Fig. 9 kann anstelle der Ventile der vorgenannten Ausführungsformen verwendet werden, so daß die mit der Erfindung erzielten Funktionsvorteile auch mit einem Ventil gemäß der Fig. 9 erzielbar sind. Der Schließzeitpunkt des Ventils liegt bei abnehmender Leistungsanforderung zunehmend vor dem Schließzeitpunkt des Einlaßventils. Der Öffnungszeitpunkt wird unabhängig vom Schließzeitpunkt an die Motordrehzahl angepaßt, um den weiter oben beschriebenen Aufladeeffekt bei verminderter Ansaugarbeit zu erzielen.

Vorteilhaft ist, wenn der Öffnungszeitpunkt des Ventils bei gleichbleibendem Schließzeitpunkt bzw. gleichbleibender Zylinderfüllmenge (Luftaufwand) derart verändert wird, daß der Aufladeeffekt auch bei Teillast zur Optimierung des Ladungswechsels genutzt wird.

Der geschilderte Effekt kann als Teillast-Resonanzaufladung zur Minimierung der Ladungswechselverluste bezeichnet werden.

## Patentansprüche

1. Verfahren zum Steuern des Betriebs einer Hubkolbenbrennkraftmaschine, insbesondere eines Gasmotors, welche Brennkraftmaschine wenigstens einen Zylinder (4) enthält, in dem ein mit einer Kurbelwelle (10) verbundener Kolben (6) arbeitet, welcher Zylinder
wenigstens eine Einlassöffnung (16) aufweist, in der ein entsprechend der Drehung der Kurbelwelle öffnendes und schließendes Einlassventil (18) arbeitet, das den Zylinder zeitweilig mit einem in der Einlassöffnung endenden Ansaugkanal (14) verbindet, und wenigstens eine Auslassöffnung (20) aufweist, in der ein entsprechend der Drehung der Kurbelwelle öffnendes und schließendes Auslassventil (24) arbeitet, das den Zylinder zeitweilig mit einem von der Auslassöffnung ausgehenden Auslasskanal (22) verbindet, wobei ein Leistungsanforderungsglied (34) vorgesehen ist, dessen Stellung die Menge der durch die Einlassöffnung strömenden Frischluftladung bestimmt, wobei in dem Ansaugkanal (14) stromoberhalb des Einlassventils (18) ein weiteres Ventil (28; 60,62; 272,278) angeordnet ist, das bei abnehmender Leistungsanforderung zunehmend vor dem Schließzeitpunkt des Einlassventils schließt,
**dadurch gekennzeichnet dass**
das weitere Ventil (28; 60,62; 272,278) derart öffnet, dass eine sich beim Öffnen des weiteren Ventils und noch geschlossenem Einlassventil (18) infolge zwischen dem weiteren Ventil und dem Einlassventil vorhandenen Unterdrucks ausbildende Druckwelle nach Reflexion am offenen Ansaugrohrende (100) das Einlassventil zu einem Zeitpunkt erreicht, zu dem dieses gerade öffnet, so dass die vom Kolben zu leistende Ansaugarbeit vermindert wird.

2. Verfahren nach Anspruch 1, wobei das weitere Ventil (28; 60, 62; 272, 278) unter Berücksichtigung des Fördervolumens und/oder des Förderdruckes einer Aufladeeinrichtung (124, 126) gesteuert wird.

3. Verfahren nach Anspruch 1 oder 2, wobei mehrere Abgasturbolader mit in Reihe geschalteten Abgasturbinen und in Reihe geschalteten Laderturbinen vorgesehen sind, und ein Abgasverteilerventil zum unmittelbaren Beaufschlagen der nachgeschalteten Abgasturbine mit Abgas in Abstimmung mit der Steuerung des bzw. der Drehschieberventils(e) gesteuert wird.

4. Verfahren nach Anspruch 3, wobei die Abgasturbinen eine variable Einlassgeometrie aufweisen, die in Abstimmung mit dem bzw. den weiteren Ventil(en) angesteuert werden.

5. Verwendung einer Ladungssteuervorrichtung bei einem Verfahren, nach einem der Ansprüche 1 bis 4, **dadurch gekennzeichnet, dass** das in der Ladungssteuervorrichtung enthaltene Einlasskanal (14) angeordnete weitere Ventil (28; 60, 62) einen innerhalb eines Gehäuses (40) gelagerten Drehschieber (30; 60) aufweist, der direkt von einem als Schrittmotor (32; 90) ausgebildeten Elektromotor angetrieben ist, der von einem elektronischen Steuergerät (26) gesteuert wird.

6. Verwendung einer Ladungssteuervorrichtung nach Anspruch 5, **dadurch gekennzeichnet, dass** zwischen dem Drehschieber (60) und dem Elektromotor (90) eine drehsteife und biegeweiche Verbindungskupplung (66) angeordnet ist.

7. Verwendung einer Ladungssteuervorrichtung nach Anspruch 5 oder 6, **dadurch gekennzeichnet, dass** der Drehschieber (60) mit dem als Magnetpolträger ausgebildeten Rotor (60) des Elektromotors eine konstruktive Einheit bildet.

8. Verwendung einer Ladungssteuervorrichtung nach einem der Ansprüche 5 bis 7, **dadurch gekennzeichnet, dass** das Gehäuse (40) und der als Magnetfeldspulenträger ausgebildete Stator des Elektromotors eine konstruktive Einheit bildet.

9. Verwendung einer Ladungssteuervorrichtung bei einem Verfahren nach einem der Ansprüche 1 bis 4, **dadurch gekennzeichnet, dass** das in der Ladungssteuervorrichtung enthaltene im Einlasskanal (14) angeordnete weitere Ventil ein Ventilglied (274) mit einem von einem mittels eines Steuergeräts (26) steuerbaren Elektromagneten (282, 284) beweglichen Schaft (276), der den Einlasskanal (14) quer durchdringt, und wenigstens zwei starr mit dem Schaft verbundene, als Schließglieder wirksame, den Schaft umschließende Scheiben (278) aufweist, die mit zugehörigen in einer im Längsschnitt durch den Einlasskanal mäanderförmigen Trennwand (270) des Einlasskanals (14) angeordneten Ventilöffnungen (272) zusammenwirken, wobei bezogen auf die Richtung der Strömung durch den Einlasskanal die Scheiben in geöffnetem Zustand des Ventils auf unterschiedlichen Seiten der Ventilöffnungen angeordnet sind, sodass sich die an den Schließgliedern wirksamen Druckunterschiede kompensieren.

10. Verwendung einer Ladungssteuervorrichtung nach Anspruch 9, **dadurch gekennzeichnet, dass** vier Ventilöffnungen (272) mit zugehörigen Scheiben (278) vorgesehen sind.

11. Verwendung einer Ladungssteuervorrichtung nach einem der Ansprüche 5 bis 10, **dadurch gekennzeichnet, dass** jeder Zylinder zwei Einlassöffnungen mit zugehörigen Eüüassventilen aufweist, und. in jedem, zu einer der Einlassöffiungen führenden Einlasskanal (46, 48) ein weiteres Ventil angeordnet ist.

## Claims

1. A method of controlling the operation of a reciprocating piston internal combustion engine, in particular a gas engine, which internal combustion engine includes at least one cylinder (4) in which a piston (6) connected to a crankshaft (10) works, which cylinder
has at least one inlet port (16) in which there operates an inlet valve (18) which opens and closes according to the rotation of the crankshaft and which temporarily communicates the cylinder with an induction passage (14) ending in the inlet port and at least one exhaust port (20) in which there operates an outlet valve (24) which opens and closes according to the rotation of the crankshaft and which temporarily communicates the cylinder with an exhaust passage (22) extending from the exhaust port, wherein a power demand member (34) is provided, the position of which determines the amount of fresh air flowing through the inlet port, wherein a further valve (28; 60, 62; 272; 278) is arranged in the induction passage (14) upstream of the inlet valve (18), closing, with a decreasing power demand, increasingly before the closing time of the inlet valve,
**characterized in that**
the further valve (28, 60, 62, 272, 278) opens in such a way that a pressure wave which forms upon opening of the valve and when the inlet valve (18) is still closed as a consequence of a reduced pressure between the valve and the inlet valve, after reflection at the open induction manifold end (100), reaches the inlet valve at a time at which same is just opening so that the induction work to be done by the piston is reduced.

2. A method according to claim 1, wherein the further valve (28; 60, 62; 272, 278) is controlled having regard to the delivery volume and/or the delivery pressure of a boost device (124, 126).

3. A method according to claim 1 or claim 2, wherein there are provided a plurality of turbochargers with exhaust gas turbines connected in series and charger turbines connected in series, and that an exhaust gas distributor valve for directly acting on the downstream-connected exhaust gas turbine with exhaust gas is controlled in co-ordinated relationship with the control of the rotary valve or valves.

4. A method according to claim 3, wherein the exhaust gas turbines have a variable inlet geometry, which are actuated in co-ordinated relationship with the valve or valves (28; 60, 62; 272, 278).

5. Use of a charge control device for a method according to any one of claims 1 to 4, **characterized in that** the further valve (28; 60; 62) arranged in the induction passage (14) has a rotary valve (30; 60) which is mounted within a housing (40) and which is driven directly by the electric motor which is in the form of a stepping motor (32; 90), the electric motor being actuated by a control device (26).

6. Use of a charge control device according to claims 5, **characterized in that** arranged between the rotary valve (60) and the electric motor (90) is a rotationally stiff and flexurally soft connecting coupling (66).

7. Use of a charge control device according to claim 5 or claim 6, **characterized in that** the rotary valve (60) forms a structural unit with the rotor (60) of the electric motor, said rotor being in the form of a magnetic pole carrier.

8. Use of a charge control device according to one of claims 5 to 7, **characterized in that** the housing (40) and the stator of the electric motor, which stator is in the form of a magnetic field coil carrier, form a structural unit.

9. Use of a charge control device for a method according to any one of claims 1 to 4, **characterized in that** the further valve (278, 272) arranged in the inlet passage (14) has a valve member (274) with a shaft (276) actuated by a solenoid device (282, 284) controlled by a control device (26), the shaft (276) passing transversely through the inlet passage (14), and at least two discs (278) surrounding the shaft as closure members (278) which are rigidly connected to the shaft and which co-operate with associated valve openings (272) in the separating wall (270) of the inlet passage (14), the separating wall (270) being of a meander configuration in longitudinal section through the inlet passage, wherein with respect to the direction of the flow through the inlet passage the discs in the opened condition of the valve are arranged on different sides of the valve openings, in such a way that the pressure differences operative at the closure members compensate for each other.

10. Use of a charge control device according to claim 9, **characterized in that** there are provided four valve openings (272) with associated discs (278).

11. Use of a charge control device according to one of claims 5 to 10, **characterized in that** each cylinder has two inlet ports with associated inlet valves, and a valve actuated by an electric motor is arranged in each inlet passage (46, 48) which leads to one of the inlet ports.

## Revendications

1. Procédée pour commander le fonctionnement d'un moteur à combustion interne à pistons alternatifs, en particulier d'un moteur à gaz, ledit moteur comprenant au moins un cylindre (4) dans lequel travaille un piston (6) relié à un vilebrequin (10), ledit cylindre
comportant au moins une ouverture d'admission (16) dans laquelle fonctionne une soupape d'admission (18) qui s'ouvre et qui se ferme en fonction de la rotation du vilebrequin et qui relie temporairement le cylindre à un canal d'aspiration (14) qui se termine dans l'ouverture d'admission, et comportant au moins une ouverture d'échappement (20) dans laquelle fonctionne une soupape d'échappement (24) qui s'ouvre et qui se ferme en fonction de la rotation du vilebrequin et qui relie temporairement le cylindre à un canal d'échappement (22) qui part depuis l'ouverture d'échappement, comprenant un organe de demande de puissance (34), la position dudite organe de demande de puissance (34) déterminant la quantité de la charge de l'air fraîche affluante par ladite ouverture d'admission, dans lequel une autre valve (28; 60, 62; 272, 278) est agencée dans le canal d'aspiration (14) en remontant le fleuve de ladite soupape d'admission (18), ladite valve ayant un instant de fermeture qui se situe progressivement avant l'instant de fermeture de la soupape d'admission lorsque la demande de puissance diminue,
**caractérisé en ce que**
ladite autre valve (28, 60, 62, 272, 278) s'ouvre de telle manière qu'une onde de pression qui apparaît lors de l'ouverture de l'autre valve tandis que la soupape d'admission (18) est encore fermée en raison de la dépression présente entre la valve et la soupape d'admission atteint, après réflexion à l'extrémité ouverte du tube d'aspiration (100), la soupape d'admission à un instant auquel celle-ci s'ouvre juste, de sorte que le travail d'aspiration à apporter par le piston est réduit.

2. Procédé selon la revendication 1, dans lequel ladite autre valve (28; 60; 62; 272, 278) est commandée en tenant compte du volume et/ou de la pression d'alimentation d'un dispositif de suralimentation (124,126).

3. Procédé selon l'une ou l'autre des revendications 1 et 2, dans lequel sont prévus plusieurs turbo-chargeurs à gaz d'échappement avec des turbines à gaz d'échappement montées en série et des turbines de charge montées en série, dans lequel une valve de répartition de gaz d'échappement destinée à alimenter directement la turbine à gaz d'échappement qui la suit avec des gaz échappement est commandée en accord avec la commande de la ou des valve(s) à tiroir rotatif.

4. Procédé selon la revendication 3, dans lequel les turbines à gaz d'échappement présentent une géométrie d'entrée variable, laquelle est pilotée en accord avec la ou les valve(s) (28; 60, 62; 272, 278).

5. Utilisation d'un dispositif de commande de charge pour un procédé selon l'une des revendications 1 à 4, **caractérisé en ce que** l'autre valve (28; 60, 62) agencée dans le canal d'aspiration (14) comporte un tiroir rotatif (30; 60) qui est monté à l'intérieur d'un boîtier (40) et qui est entraîné directement par le moteur électrique réalisé sous forme de moteur pas à pas (32; 90), et qu'un appareil de commande (26) est prévu qui pilote le moteur électrique.

6. Utilisation d'un dispositif de commande de charge selon la revendication 5, **caractérisé en ce qu'**un accouplement de jonction (66) rigide en torsion et souple en flexion est agencé entre le tiroir rotatif (60) et le moteur électrique (90).

7. Utilisation d'un dispositif de commande de charge selon l'une ou l'autre des revendications 5 et 6, **caractérisé en ce que** le tiroir rotatif (60) forme une unité structurelle conjointement avec le rotor (60) du moteur électrique, réalisé sous forme de support de pôles magnétiques.

8. Utilisation d'un dispositif de commande de charge selon l'une des revendications 5 à 7, **caractérisé en ce que** le boîtier (40) et le stator du moteur électrique, réalisé sous forme de support de bobines magnétiques, forment une unité structurelle.

9. Utilisation d'un dispositif de commande de charge pour un procédé selon l'une des revendications 1 à 4, **caractérisé en ce que** l'autre valve agencée dans le canal d'admission (14) comporte un organe de valve (274) avec une tige (276) étant mobile au moyen d'un aimant électrique commandée par un appareil de commande (26) et traversant transversalement le canal d'admission (14), et au moins deux disques (278) entourant la tige opérants comme éléments de fermeture reliés rigidement à la tige, lesquels coopèrent avec des ouvertures de valve (272) associées ménagées dans une paroi de séparation (270) du canal d'admission (14) présentante en coupe longitudinale à travers le canal d'admission une forme sinueuse, de sorte que, par référence à la direction de l'écoulement à travers le canal d'admission, les disques sont agencés, dans l'état ouvert de la valve, sur des côtés différents des ouvertures de valve de telle manière que les différences de pression agissant au niveau des éléments de fermeture se compensent.

10. Utilisation d'un dispositif de commande de charge selon la revendication 9, **caractérisé en ce que** quatre ouvertures de valve (272) avec des disques associés (278) sont prévues.

11. Utilisation d'un dispositif de commande de charge selon l'une des revendications 5 à 10, **caractérisé en ce que** chaque cylindre comporte deux ouvertures d'admission avec des soupapes d'admission associées, et **en ce que** dans chaque canal d'admission (46, 48) qui mène à l'une des ouvertures d'admission est agencée une valve actionnée par un moteur électrique.
